# EUROPEAN PATENT APPLICATION

(11) **EP 3 757 773 A1**
(43) Date of publication of application: **30.12.2020**
(21) Application number: 20165127.0
(22) Date of filing: 24.03.2020
(51) Int. Cl.: G06F 9/38

(54) **HARDWARE LOAD HARDENING FOR SPECULATIVE SIDE-CHANNEL ATTACKS**

(30) Priority: 29.06.2019 US 201916458006
(71) Applicant: INTEL Corporation, Santa Clara, CA 95054 (US)
(72) Inventor: LIU, Fangfei, Hillsboro, Oregon 97124 (US); ALAMELDEEN, Alaa, Hillsboro, Oregon 97124 (US); BASAK, Abhishek, Bothell, Washington 98012 (US); GABOR, Ron, 4631705 Herzliya (IL); MCKEEN, Francis, Portland, Oregon 97229 (US); NUZMAN, Joseph, 34381 Haifa (IL); ROZAS, Carlos, Portland, Oregon 97229 (US); YANOVER, Igor, 20692 Yokneam Illit (IL); ZOU, Xiang, Portland, Oregon 97229 (US)
(74) Representative: Samson & Partner Patentanwälte mbB

(57) **Abstract**

Embodiments of methods and apparatuses for hardware load hardening are disclosed. In an embodiment, a processor includes safe logic, data forwarding hardware, and data fetching hardware. The safe logic is to determine whether a load is safe. The data forwarding hardware is to, in response to a determination that the load is safe, forward data requested by the load. The data fetching logic is to fetch the data requested by the load, regardless of the determination that the load is safe.

## Description

### FIELD OF THE INVENTION

The field of invention relates generally to computers, and, more specifically, to computer system security.

### BACKGROUND

Computer systems may be vulnerable to attempts by adversaries to obtain confidential, private, or secret confidential information. For example, attacks, such as Spectre and Meltdown, exploit speculative and out-of-order execution capabilities of processors to illicitly read data through side-channel analysis.

### BRIEF DESCRIPTION OF THE DRAWINGS

The present invention is illustrated by way of example and not limitation in the figures of the accompanying drawings, in which like references indicate similar elements and in which:
Figure 1 illustrates an example of a disclosure gadget and a disclosure primitive;
Figure 2 illustrates preventing information from being consumed speculatively through an access instruction to prevent the information from being transmitted through a side channel.
Figure 3 is a block diagram of a processor pipeline and cache hierarchy that may be used to execute a load instruction;
Figure 4 is a block diagram of a processor pipeline and cache hierarchy including support for hardware load hardening according to an embodiment of the invention;
Figure 5 is a flow diagram of a method of hardware load hardening according to an embodiment of the invention;
Figure 6A is a block diagram illustrating both an exemplary in-order pipeline and an exemplary register renaming, out-of-order issue/execution pipeline according to embodiments of the invention;
Figure 6B is a block diagram illustrating both an exemplary embodiment of an in-order architecture core and an exemplary register renaming, out-of-order issue/execution architecture core to be included in a processor according to embodiments of the invention;
Figure 7 is a block diagram of a processor that may have more than one core, may have an integrated memory controller, and may have integrated graphics according to embodiments of the invention;
Figures 8-11 are block diagrams of exemplary computer architectures;

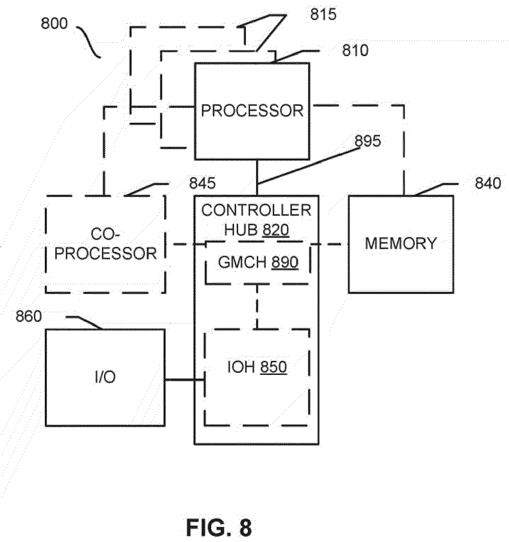

Figure 8 shows a block diagram of a system in accordance with one embodiment of the present invention;

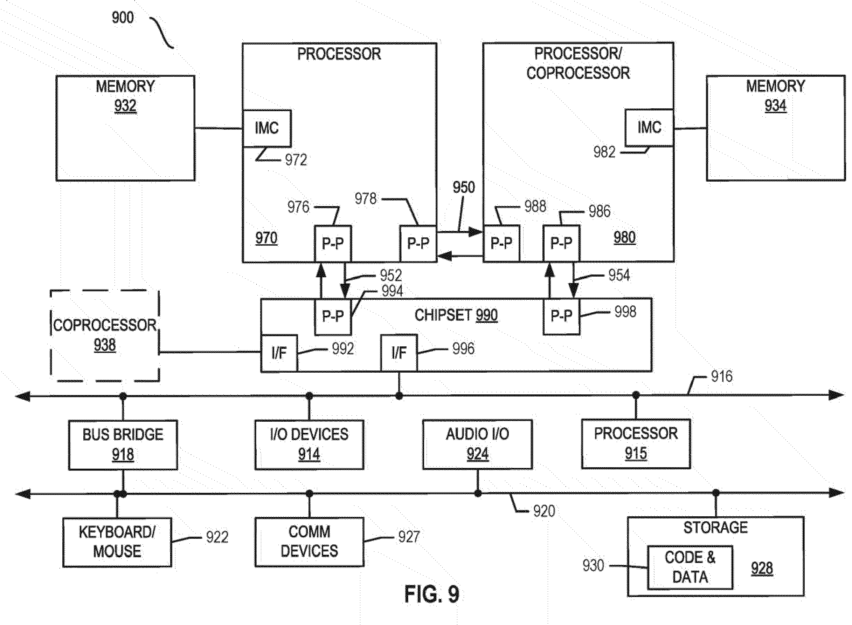

Figure 9 is a block diagram of a first more specific exemplary system in accordance with an embodiment of the present invention;

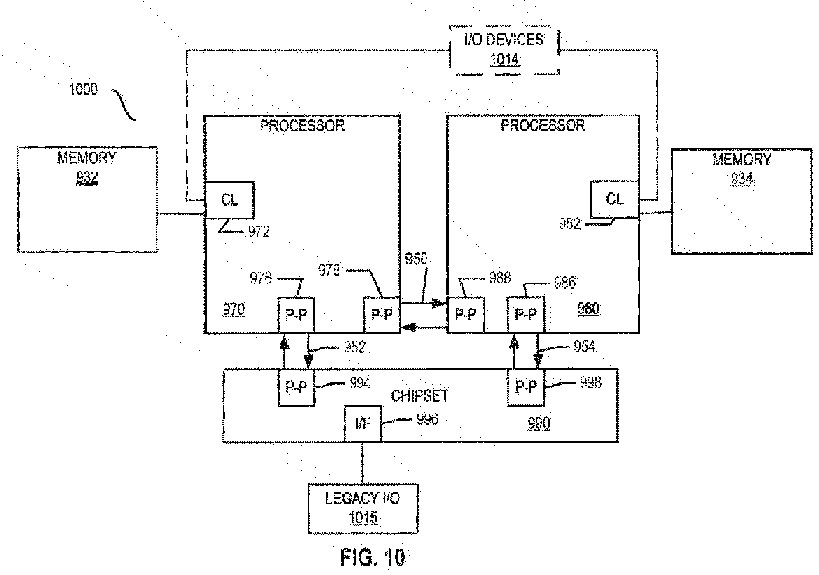

Figure 10 is a block diagram of a second more specific exemplary system in accordance with an embodiment of the present invention;

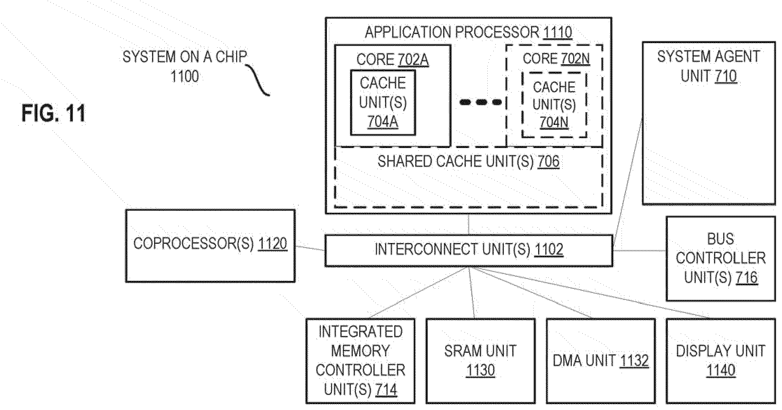

Figure 11 is a block diagram of a system-on-chip (SoC) in accordance with an embodiment of the present invention;

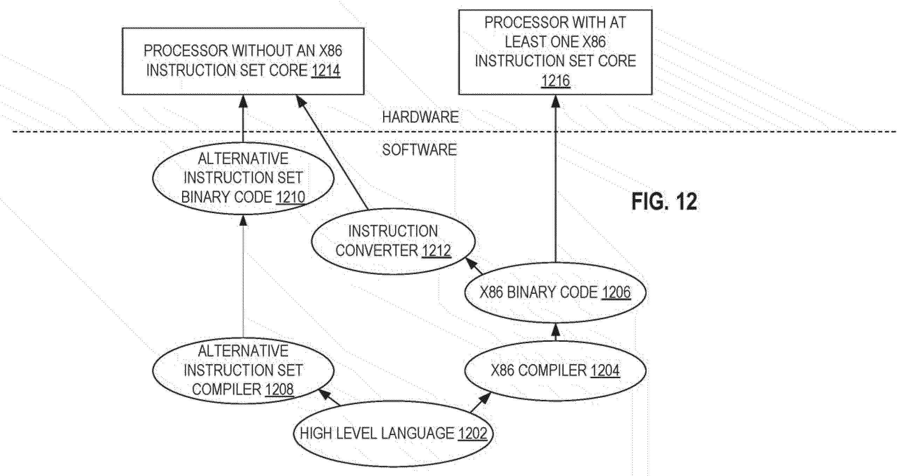

Figure 12 is a block diagram contrasting the use of a software instruction converter to convert binary instructions in a source instruction set to binary instructions in a target instruction set according to embodiments of the invention.

### DETAILED DESCRIPTION

In the following description, numerous specific details are set forth. However, it is to be understood that embodiments of the invention may be practiced without these specific details. In other instances, well-known circuits, structures, and techniques have not been shown in detail in order not to obscure the understanding of this description.

References in the specification to "one embodiment," "an embodiment," "an example embodiment," etc., indicate that the embodiment described may include a particular structure, feature, or characteristic, but every embodiment may not necessarily include the particular structure, feature, or characteristic. Moreover, such phrases are not necessarily referring to the same embodiment. Further, when a feature, structure, or characteristic is described in connection with an embodiment, it is submitted that it is within the knowledge of one skilled in the art to affect such feature, structure, or characteristic in connection with other embodiments whether or not explicitly described.

Many processors and processor cores support capabilities to increase performance, such as caching, multithreading, out-of-order execution, branch prediction, and speculative execution. Adversaries have found ways to exploit capabilities of these processors to illicitly read data.

For example, an adversary might intentionally attempt to read data (e.g., secret data) from a memory location that should not be readable by it (e.g., out-of-bounds). The read might be allowed to proceed speculatively until it is determined whether the access is out-of-bounds. The architectural correctness of the system might be ensured by not committing any results until the determination is made, but the speculative execution might cause the microarchitectural state of the processor to change before the determination is made, and the adversary might be able to perform side-channel analysis to infer the value of the secret data from differences in the microarchitectural state of the processor. Many variants of this type of speculative attacks are possible. In one scenario, the adversary might speculatively use the secret data as part of a memory address, and, using a timing analysis to determine what memory locations are being loaded into a cache, infer the value.

Embodiments of the invention include systems, methods, and apparatuses providing features or characteristics that may be desirable for use in a variety of computer systems for a variety of reasons, including to reduce vulnerability to attacks based on speculation, side-channel analysis, etc.; to reduce vulnerability to such analysis with less cost, in performance or otherwise, than an alternative approach; and/or to improve security in general.

Embodiments may provide for a load instruction or operation to be de-coupled into two separate operations, a prefetch operation that may be performed speculatively and a data forwarding operation that may be delayed until the load instruction is no longer speculative. Embodiments may be desirable to avoid the complexity and performance penalty associated with software approaches to mitigating side-channel attacks.

As discussed above, speculative execution capabilities of a processor may make the processor vulnerable to exploits when the processor executes on a speculative path. A speculation mechanism that causes the processor to begin executing on a speculative path may be referred to as a speculation primitive. A speculation primitive might make the processor vulnerable to an exploit because, for example, the processor might begin execution on a speculative path (e.g., branch prediction) before the resolution of a condition to determine whether the path is correct and/or allowed (e.g., a boundary check).

Exploits may also use or depend on a windowing gadget that creates sufficient delay before speculation is resolved. For example, if a branch condition depends on data to be loaded into a cache, execution on the speculative path might continue at least until the data is loaded.

During speculative execution, a first instruction (referred to as an access instruction) may read secret data speculatively and a second instruction (referred to as a transmit instruction) may encode the secret data in the state of the processor or otherwise affect the processor or operation of a processor in a way that might be observable (e.g., by an attacker). These two instructions together may be referred to as a disclosure gadget.

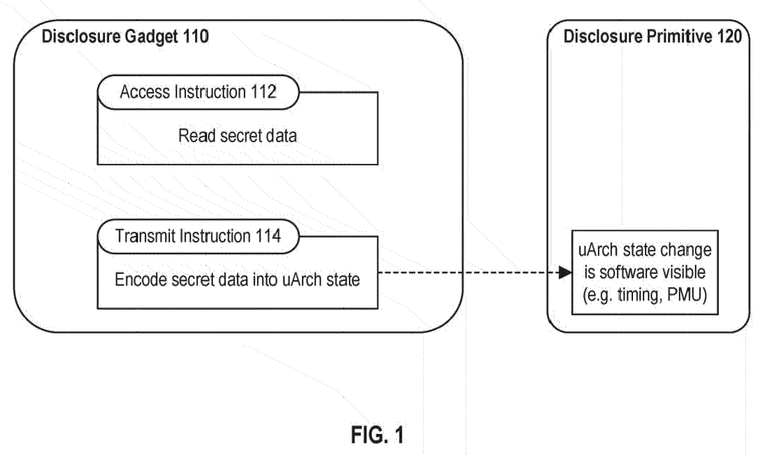

Exploits may also use or depend on a disclosure primitive that an attacker might use to receive the information through a side channel after it has been leaked and transmitted. Figure 1 illustrates an example of a disclosure gadget 110, executed in a victim's context or an attacker's context, and a disclosure primitive 120, executed in an attacker's context. Disclosure gadget 110 includes access instruction 112 that reads secret data and transmit instruction 114 that encodes the secret data into a micro-architectural state. Disclosure primitive may receive the secret data because the micro-architectural state change is visible by software (e.g., through timing and/or a performance monitoring unit).

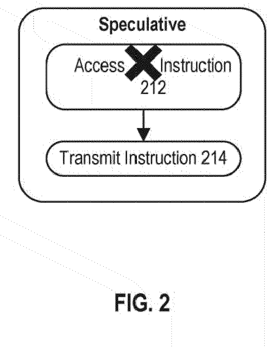

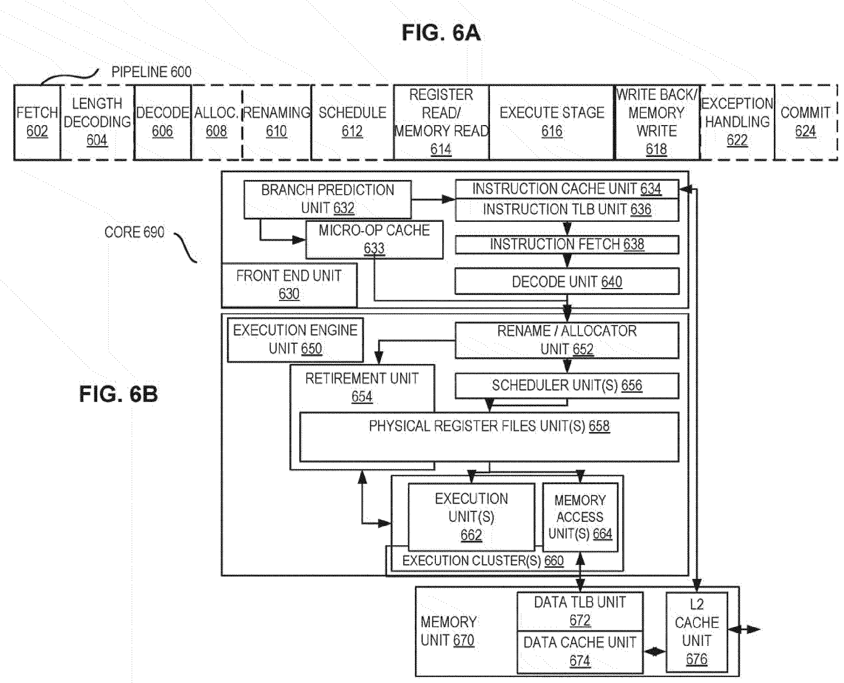

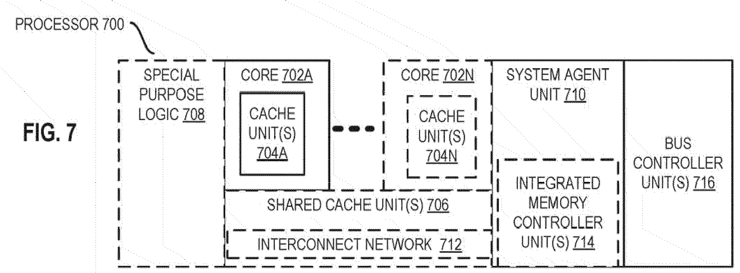

Embodiments of the invention involve changing the operation of a processor core (e.g., core 690 in Fig. 6 or any of cores 702A-N in Fig. 7 or Fig. 11) or processor (e.g., processor 700 in Fig. 7; any of processors 810 or 815 in Fig. 8; any of processors 970, 980, or 915 in Fig. 9 or Fig. 10; or processor 1110 in Fig. 11) in response to an access instruction, as described above, to mitigate vulnerability to such exploits and/or attacks. Figure 2 illustrates preventing information read by access instruction from being consumed speculatively and from being transmitted through a side channel. As illustrated in Figure 2, if information accessed through access instruction 212 is not consumed speculatively, the information is not transmitted through a side channel, regardless of what transmit instruction 214 or disclosure primitive follows and/or is attempted to be used.

For example, when the access instruction is a load instruction that performs an unauthorized memory access, any instruction might be used as a transmit instruction. The transmit instruction might be a load or store instruction that allows information to be transmitted through secret-information data flow, as illustrated with the following pseudocode:

```
              struct array *arr1 = ...;
              struct array *arr2 = ... ;
              unsigned long offset = ...;
              if (offset < arr1->len) {
                    unsigned char value = arr1->data[offset]; // access instruction
                    unsigned char value2 = arr2->data[value]; // transmit instruction
```

Or, the transmit instruction might be any instruction that allows information to be transmitted through secret-dependent control flow (e.g., by changing the state of an instruction cache, by causing a vector processing unit to be powered on and/or used), as illustrated with the following pseudocode:

```
              if (offset < arr1->len) {
                    if (arr1->data[offset]) { // access instruction
                           _mm256_instruction(); // transmit instruction
              }
```

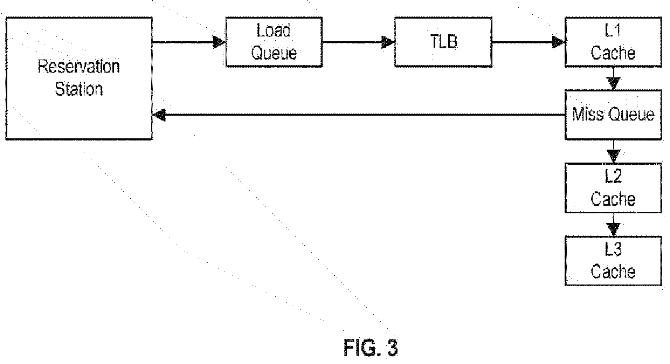

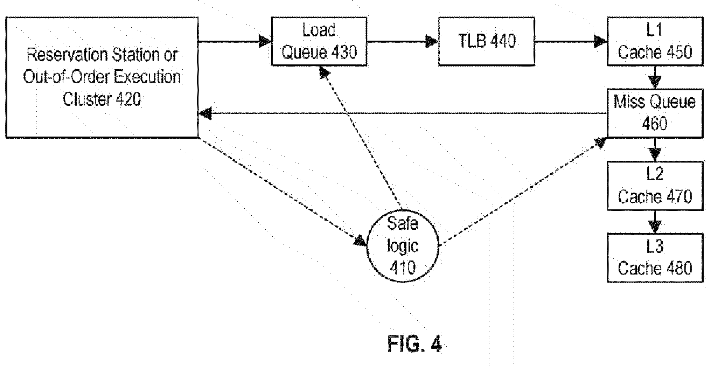

Figure 3 is a block diagram of a processor pipeline (which may represent a portion of pipeline 600 in Fig. 6A) and cache hierarchy that may be used to execute a load instruction. Not dispatching speculative load instructions to this pipeline prevents them from being exploitable access instructions but may have an undesirably large negative impact on performance. Therefore, embodiments of the invention enable a speculative load instruction to be performed in two separate operations: a speculative cache data fetch operation and a non-speculative data forwarding operation. The processor pipeline includes a safe logic (e.g., safe logic 410 in Figure 4, as described below) to determine whether a load is speculative or not.

Figure 4 is a block diagram of a processor pipeline (which may represent a portion of pipeline 600 in Fig. 6A) and cache hierarchy including support for hardware load hardening according to an embodiment of the invention. When data requested by a load instruction misses in level 1 (L1) cache 450, a demand fetch may fetch a cache line including the data. This data fetch operation is de-coupled from the data forwarding operation such that it may be performed speculatively. The speculative data fetch operation may also include looking up an address translation in translation lookaside buffer (TLB) 440. The data forwarding operation may be delayed, until the load is no longer speculative, or squashed, if the speculation is on the wrong path.

Safe logic 410 may include hardware and/or logic to determine if and when the data forwarding operation is safe. In various embodiments, safe logic 410 may determine that the data forwarding operation is safe when any, or any combination of the following is true: the load is no longer speculative, the load can no longer be squashed, all previous branches have been resolved (e.g., when the speculation is due to a branch prediction), the load is ready to be retired without any fault, the load is ready to be retired despite a fault. In various embodiments, safe logic 410 may make these determinations based on information from reservation station or out-of-order execution cluster 420 and/or any hardware and/or logic (e.g., a reorder buffer) that manages or is involved in out-of-order execution.

The safe condition, as determined by safe logic 410, may be used by load queue 430, which maintains the order of loads, and/or miss queue 460, which manages data requests that miss in L1 450.

While the safe condition is false, the load is blocked (e.g., by load queue 430) and no data requested by the load instruction is forwarded to dependent instructions, regardless of whether the request hits or misses in L1 450. However, if the request misses in L1 450, a demand fetch is performed (e.g., by miss queue 460) to fetch the data (e.g., from L2 cache 470, L3 cache 480, or system memory), and, if the address of the data misses in the TLB, a page table walk is performed, and the translation inserted into the TLB.

If and when the safe condition is or becomes true, data found in L1 cache 450 is forwarded to dependent instructions and data not found in L1 cache 450 is fetched and forwarded to dependent instructions.

Thus, a load instruction is converted into a data fetch operation, which may be performed speculatively, and a data forwarding operation that is not performed speculatively. The speculative data fetch operation may include a demand fetch of the requested data, including loading a cache line containing the data into the L1 cache and changing cache coherency states if necessary, and performing an address translation and loading it into the TLB. Therefore, unlike a software or other approach in which a load instruction is not performed speculatively, the data requested by a load instruction is more likely to be available (e.g., in the L1 cache) for forwarding as soon as the load instruction is no longer speculative.

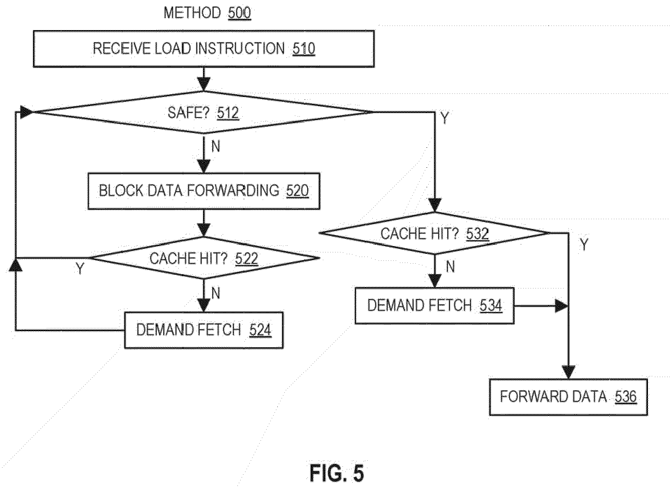

Figure 5 is a flow diagram of method 500, an example of a method of hardware load hardening according to an embodiment of the invention. Various method embodiments may include all or any of the actions shown in Figure 5, with or without other actions that are not shown (including actions related to the preceding or the following description), in various combinations and orders.

In 510, a load instruction is received by a processor. In 512, safe logic determines whether the load is safe.

In 520, in response to a determination that the load is not safe, data forwarding is blocked. In 522, it is determined whether the requested data is available (e.g., hit to L1 cache). In 524, in response to a determination that the requested data is not available, a demand fetch is performed. From 522 (if it is determined that data is available) and 524 (if not), method 500 returns to 512 until it is determined that the load is safe (or the load is squashed, not shown).

In 532, in response to a determination that the load is safe, it is determined whether the requested data is available (e.g., hit to L1 cache). In 534, in response to a determination that the requested data is not available, a demand fetch is performed. In 536, in response to a determination that the requested data is available, the data is forwarded to dependent operations.

Embodiments may include a capability to selectively enable and disable hardware load hardening, for example, to harden (e.g., convert into a speculative data fetch operation and a non-speculative data forwarding operation) only speculative security-critical loads. Determining whether to harden a load operation may be based on whether the load attempts to access protected data or is otherwise unauthorized or requires authorization that has not yet been obtained. The determination may be performed dynamically, leveraging existing processor features (e.g., in a memory execution unit), such as protection key technology. For example, a load requesting data from a protected page for which the load does not have (or does not yet have) the key may be hardened. In embodiments, selective enablement may be used (e.g., only for conditional branches) based on a desire to reduce vulnerability to specific exploits and/or attacks (e.g., spectre v1, assuming other techniques are being used for other variants).

Embodiments may include techniques that may improve performance with more aggressive prefetching. For example, speculative prefetching in connection with a load may be triggered not only in response to an L1 miss, but also in response to an L1 hit under certain conditions. Any known techniques, including those used by hardware prefetchers, may be used, such as using a hit to a cache line as a trigger to prefetch a next sequential cache line. Embodiments may also include using and/or extending a load queue to store prefetched data to reduce the chance that a cache line loaded speculatively will be evicted before the safe logic determines that the load is safe.

Embodiments may include compiler support for hardware load hardening. For example, a compiler may identify critical loads (e.g., loads that have long dependency chains or that branch conditions depend on) and insert prefetch instructions before them to reduce the performance impact of delaying the forwarding of data requested by these loads.

In an embodiment, a processor may include safe logic, data forwarding hardware, and data fetching hardware. The safe logic is to determine whether a load is safe. The data forwarding hardware is to, in response to a determination that the load is safe, forward data requested by the load. The data fetching logic is to fetch the data requested by the load, regardless of the determination that the load is safe.

The data forwarding hardware may also be to, in response to a determination that the load is unsafe, block forwarding of the data. The data forwarding hardware may include a load queue. The data fetching hardware may include a miss queue. The safe logic may be to determine whether the load is safe based on information from a reservation station or an out-of-order execution cluster. The processor may also comprise a translation lookaside buffer to store an address translation, the address translation to be performed in response to the load, regardless of the determination that the load is safe. The safe logic may be to determine that the load is safe when it is no longer speculative. The load may be performed in response to a load instruction. The safe logic may be to determine that the load is safe when the load instruction is ready to be retired. The data may be forwarded to one or more dependent instructions. The load may be squashed in response to a determination that speculative execution of the load is on a wrong path. The load may be executed in response to a branch prediction. The safe logic may be to determine that the load is safe when a condition to the branch prediction is satisfied.

In an embodiment, a method may include determining whether a load is safe; in response to determining that the load is unsafe, blocking forwarding of data requested by the load; and, regardless of a determination that the load is unsafe, fetching the data requested by the load.

The method may also include, in response to determining that the load is safe, forwarding the data. The method may also include, regardless of the determination that the load is unsafe, performing an address translation and storing the result in a translation lookaside buffer. The method may include the load being on a speculative execution path. The method may also include determining that the speculative execution path is wrong; and in response to determining that the speculative execution path is wrong, squashing the load.

In an embodiment, a system may include a system memory and a processor as described above, wherein the data may be fetched from the system memory.

In an embodiment, an apparatus may include means for determining whether a load is safe; means for, in response to a determination that the load is safe, forwarding data requested by the load; and means for fetching the data requested by the load, regardless of the determination that the load is safe.

The data forwarding means may also be to, in response to a determination that the load is unsafe, block forwarding of the data. The data forwarding means may include a load queue. The data fetching mean may include a miss queue. The safe determination means may be to determine whether the load is safe based on information from a reservation station or an out-of-order execution cluster. The apparatus may also comprise a translation lookaside buffer to store an address translation, the address translation to be performed in response to the load, regardless of the determination that the load is safe. The safe determination means may be to determine that the load is safe when it is no longer speculative. The load may be performed in response to a load instruction. The safe determination means may be to determine that the load is safe when the load instruction is ready to be retired. The data may be forwarded to one or more dependent instructions. The load may be squashed in response to a determination that speculative execution of the load is on a wrong path. The load may be executed in response to a branch prediction. The safe determination means may be to determine that the load is safe when a condition to the branch prediction is satisfied.

In an embodiment, an apparatus may comprise a data storage device that stores code that when executed by a hardware processor causes the hardware processor to perform any method disclosed herein. An apparatus may be as described in the detailed description. A method may be as described in the detailed description.

In an embodiment, a non-transitory machine-readable medium may store code that when executed by a machine causes the machine to perform a method comprising any method disclosed herein.

### Exemplary Core, Processor, and System Architectures

Embodiments of the invention have been described and depicted with reference to a processor, which may represent any of many different processors in which the invention is embodied in different ways and/or for different purposes. These processors and cores, for example as described below, may include hardware, such as caches and branch predictors, that improve performance but may make the processor and/or core more vulnerable to analysis that may be defended against according to embodiments of the invention.

For instance, implementations of cores in a processor in which the invention may be embodied may include: a general purpose in-order core intended for general-purpose computing; a high-performance general purpose out-of-order core intended for general-purpose computing; a special purpose core intended primarily for graphics and/or scientific (throughput) computing. Implementations of processors in which the invention may be embodied may include: a central processing unit (CPU) including one or more general purpose in-order cores intended for general-purpose computing and/or one or more general purpose out-of-order cores intended for general-purpose computing; and a coprocessor including one or more special purpose cores intended primarily for graphics and/or scientific (throughput) computing. Such different processors lead to different computer system architectures, which may include: the coprocessor on a separate chip from the CPU; the coprocessor on a separate die in the same package as a CPU; the coprocessor on the same die as a CPU (in which case, such a coprocessor is sometimes referred to as special purpose logic, such as integrated graphics and/or scientific (throughput) logic, or as special purpose cores); and a system on a chip (SoC) that may include on the same die the described CPU (sometimes referred to as the application core(s) or application processor(s)), the above described coprocessor, and additional functionality.

Exemplary core architectures are described next, followed by descriptions of exemplary processors and computer architectures. Each processor may include one or more cores, where each core and/or combination of cores may be architected and designed to execute one or more threads, processes, or other sequences of instructions at various times. Core architectures and design techniques may provide for and/or support the concurrent execution of multiple threads, according to any of a type of approaches known as simultaneous (or symmetric) multi-threading (SMT) or any other approach.

Further, as mentioned above and explained in more detail below, embodiments of the present disclosure may apply to any type of processor or processing element, including general-purpose processors, server processors or processing elements for use in a server-environment, coprocessors (e.g., security coprocessors) high-throughput MIC processors, GPGPU's, accelerators (such as, e.g., graphics accelerators or digital signal processing (DSP) units, cryptographic accelerators, fixed function accelerators, machine learning accelerators, networking accelerators, or computer vision accelerators), field programmable gate arrays, or any other processor or processing device. The processor or processors may be implemented on one or more chips. The processor or processors may be a part of and/or may be implemented on one or more substrates using any of a number of process technologies, such as, for example, BiCMOS, CMOS, or NMOS. The processors and processing devices listed above and described herein are exemplary; as explained herein, the present disclosure is applicable to any processor or processing device.

Further, as mentioned above and explained in more detail below, embodiments of the present disclosure may apply to processors or processing elements using a wide variety of instruction sets and instruction set architectures, including for example, the x86 instruction set (optionally including extensions that have been added with newer versions); the MIPS instruction set of MIPS Technologies of Sunnyvale, CA; the ARM instruction set (with optional additional extensions such as NEON) of ARM Holdings of Sunnyvale, CA; IBM's "Power" instruction set, or any other instruction set, including both RISC and CISC instruction sets. The instruction sets and instruction set architectures listed above and described herein are exemplary; as explained herein, the present disclosure is applicable to any instruction set or instruction set architecture.

### Exemplary Core Architecture

Figure 6A is a block diagram illustrating both an exemplary in-order pipeline and an exemplary register renaming, out-of-order issue/execution pipeline according to embodiments of the invention. Figure 6B is a block diagram illustrating both an exemplary embodiment of an in-order architecture core and an exemplary register renaming, out-of-order issue/execution architecture core to be included in a processor according to embodiments of the invention. The solid lined boxes in Figures 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 6A, a processor pipeline 600 includes a fetch stage 602, a length decode stage 604, a decode stage 606, an allocation stage 608, a renaming stage 610, a scheduling (also known as a dispatch or issue) stage 612, a register read/memory read stage 614, an execute stage 616, a write back/memory write stage 618, an exception handling stage 622, and a commit stage 624.

Figure 6B shows processor core 690 including a front-end unit 630 coupled to an execution engine unit 650, and both are coupled to a memory unit 670. The core 690 may be a reduced instruction set computing (RISC) core, a complex instruction set computing (CISC) core, a very long instruction word (VLIW) core, or a hybrid or alternative core type. As yet another option, the core 690 may be a special-purpose core, such as, for example, a network or communication core, compression engine, coprocessor core, general purpose computing graphics processing unit (GPGPU) core, graphics core, or the like. For example, as explained above, core 690 may be any member of a set containing: general-purpose processors, server processors or processing elements for use in a server-environment, coprocessors (e.g., security coprocessors) high-throughput MIC processors, GPGPU's, accelerators (such as, e.g., graphics accelerators or digital signal processing (DSP) units, cryptographic accelerators, fixed function accelerators, machine learning accelerators, networking accelerators, or computer vision accelerators), field programmable gate arrays, or any other processor or processing device.

The front-end unit 630 includes a branch prediction unit 632 coupled to a micro-op cache 633 and an instruction cache unit 634, which is coupled to an instruction translation lookaside buffer (TLB) 636, which is coupled to an instruction fetch unit 638, which is coupled to a decode unit 640. The decode unit 640 (or decoder) may decode instructions, and generate as an output one or more micro-operations, micro-code entry points, microinstructions, other instructions, or other control signals, which are decoded from, or which otherwise reflect, or are derived from, the original instructions. The micro-operations, micro-code entry points, microinstructions, etc. may be stored in at least the micro-op cache 633. The decode unit 640 may be implemented using various different mechanisms. Examples of suitable mechanisms include, but are not limited to, look-up tables, hardware implementations, programmable logic arrays (PLAs), microcode read only memories (ROMs), etc. In one embodiment, the core 690 includes a microcode ROM or other medium that stores microcode for certain macroinstructions (e.g., in decode unit 640 or otherwise within the front-end unit 630). The micro-op cache 633 and the decode unit 640 are coupled to a rename/allocator unit 652 in the execution engine unit 650. In various embodiments, a micro-op cache such as 633 may also or instead be referred to as an op-cache, u-op cache, uop-cache, or µοp-cache; and micro-operations may be referred to as micro-ops, u-ops, uops, and µops.

The execution engine unit 650 includes the rename/allocator unit 652 coupled to a retirement unit 654 and a set of one or more scheduler unit(s) 656. The scheduler unit(s) 656 represents any number of different schedulers, including reservations stations, central instruction window, etc. The scheduler unit(s) 656 is coupled to the physical register file(s) unit(s) 658. Each of the physical register file(s) units 658 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 658 comprises a vector registers unit, a write mask registers unit, and a scalar registers unit. These register units may provide architectural vector registers, vector mask registers, and general purpose registers. The physical register file(s) unit(s) 658 is overlapped by the retirement unit 654 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 654 and the physical register file(s) unit(s) 658 are coupled to the execution cluster(s) 660. The execution cluster(s) 660 includes a set of one or more execution units 662 and a set of one or more memory access units 664. The execution units 662 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 656, physical register file(s) unit(s) 658, and execution cluster(s) 660 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 664). It should also be understood that where separate pipelines are used, one or more of these pipelines may be out-of-order issue/execution and the rest in-order.

The set of memory access units 664 is coupled to the memory unit 670, which includes a data TLB unit 672 coupled to a data cache unit 674 coupled to a level 2 (L2) cache unit 676. In one exemplary embodiment, the memory access units 664 may include a load unit, a store address unit, and a store data unit, each of which is coupled to the data TLB unit 672 in the memory unit 670. The instruction cache unit 634 is further coupled to a level 2 (L2) cache unit 676 in the memory unit 670. The L2 cache unit 676 is coupled to one or more other levels of cache and eventually to a main memory.

By way of example, the exemplary register renaming, out-of-order issue/execution core architecture may implement the pipeline 600 as follows: 1) the instruction fetch 638 performs the fetch and length decoding stages 602 and 604; 2) the decode unit 640 performs the decode stage 606; 3) the rename/allocator unit 652 performs the allocation stage 608 and renaming stage 610; 4) the scheduler unit(s) 656 performs the schedule stage 612; 5) the physical register file(s) unit(s) 658 and the memory unit 670 perform the register read/memory read stage 614; the execution cluster 660 perform the execute stage 616; 6) the memory unit 670 and the physical register file(s) unit(s) 658 perform the write back/memory write stage 618; 7) various units may be involved in the exception handling stage 622; and 8) the retirement unit 654 and the physical register file(s) unit(s) 658 perform the commit stage 624.

The core 690 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA, IBM's "Power" instruction set, or any other instruction set, including both RISC and CISC instruction sets), including the instruction(s) described herein. In one embodiment, the core 690 includes logic to support a packed data instruction set extension (e.g., AVX, AVX2, AVX-512), thereby allowing the operations used by many multimedia applications to be performed using packed data.

It should be understood that the core may support multithreading (executing two or more parallel sets of operations or threads), and may do so in a variety of ways including time sliced multithreading, SMT (e.g., a single physical core provides a logical core for each of the threads that physical core is simultaneously multithreading), or a combination thereof (e.g., time sliced fetching and decoding, and SMT thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 634/674 and a shared L2 cache unit 676, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache(s) may be external to the core and/or the processor.

### Exemplary Processor Architectures

Figure 7 is a block diagram of a processor 700 that may have more than one core, may have an integrated memory controller, and may have integrated graphics according to embodiments of the invention. The solid lined boxes in Figure 7 illustrate a processor 700 with a single core 702A, a system agent 710, a set of one or more bus controller units 716, while the optional addition of the dashed lined boxes illustrates an alternative processor 700 with multiple cores 702A-N, a set of one or more integrated memory controller unit(s) 714 in the system agent unit 710, and special purpose logic 708.

Thus, different implementations of the processor 700 may include: 1) a CPU with the special purpose logic 708 being integrated graphics and/or scientific (throughput) logic (which may include one or more cores), and the cores 702A-N being one or more general purpose cores (e.g., general purpose in-order cores, general purpose out-of-order cores, a combination of the two); 2) a coprocessor with the cores 702A-N being a large number of special purpose cores intended primarily for graphics and/or scientific (throughput); 3) a coprocessor with the cores 702A-N being a large number of general purpose in-order cores; and 4) the cores 702A-N representing any number of disaggregated cores with a separate input/output (I/O) block. Thus, the processor 700 may be a general-purpose processors, server processors or processing elements for use in a server-environment, coprocessors (e.g., security coprocessors) high-throughput MIC processors, GPGPU's, accelerators (such as, e.g., graphics accelerators or digital signal processing (DSP) units, cryptographic accelerators, fixed function accelerators, machine learning accelerators, networking accelerators, or computer vision accelerators), field programmable gate arrays, or any other processor or processing device. The processor may be implemented on one or more chips. The processor 700 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 706, and external memory (not shown) coupled to the set of integrated memory controller units 714. The set of shared cache units 706 may include one or more mid-level caches, such as level 2 (L2), level 3 (L3), level 4 (L4), or other levels of cache, a last level cache (LLC), and/or combinations thereof. While in one embodiment a ring-based interconnect unit 712 interconnects the integrated graphics logic 708 (integrated graphics logic 708 is an example of and is also referred to herein as special purpose logic), the set of shared cache units 706, and the system agent unit 710/integrated memory controller unit(s) 714, alternative embodiments may use any number of well-known techniques for interconnecting such units. In one embodiment, coherency is maintained between one or more cache units 706 and cores 702-A-N.

In some embodiments, one or more of the cores 702A-N are capable of multi-threading. The system agent 710 includes those components coordinating and operating cores 702A-N. The system agent unit 710 may include for example a power control unit (PCU) and a display unit. The PCU may be or include logic and components needed for regulating the power state of the cores 702A-N and the integrated graphics logic 708. The display unit is for driving one or more externally connected displays.

The cores 702A-N may be homogenous or heterogeneous in terms of architecture instruction set; that is, two or more of the cores 702A-N may be capable of execution the same instruction set, while others may be capable of executing only a subset of that instruction set or a different instruction set.

### Exemplary Computer Architectures

Figures 8-11 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), general-purpose processors, server processors or processing elements for use in a server-environment, coprocessors (e.g., security coprocessors) high-throughput MIC processors, GPGPU's, accelerators (such as, e.g., graphics accelerators, cryptographic accelerators, fixed function accelerators, machine learning accelerators, networking accelerators, or computer vision accelerators), field programmable gate arrays, or any other processor or processing device, graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to Figure 8, shown is a block diagram of a system 800 in accordance with one embodiment of the present invention. The system 800 may include one or more processors 810, 815, which are coupled to a controller hub 820. In one embodiment, the controller hub 820 includes a graphics memory controller hub (GMCH) 890 and an Input/Output Hub (IOH) 850 (which may be on separate chips); the GMCH 890 includes memory and graphics controllers to which are coupled memory 840 and a coprocessor 845; the IOH 850 couples I/O devices 860 to the GMCH 890. Alternatively, one or both of the memory and graphics controllers are integrated within the processor (as described herein), the memory 840 and the coprocessor 845 are coupled directly to the processor 810, and the controller hub 820 in a single chip with the IOH 850.

The optional nature of additional processors 815 is denoted in Figure 8 with broken lines. Each processor 810, 815 may include one or more of the processing cores described herein and may be some version of the processor 700.

The memory 840 may be, for example, dynamic random-access memory (DRAM), phase change memory (PCM), or a combination of the two. For at least one embodiment, the controller hub 820 communicates with the processor(s) 810, 815 via a multi-drop bus, such as a front-side bus (FSB), point-to-point interface such as QuickPath Interconnect (QPI), or similar connection 895.

In one embodiment, the coprocessor 845 is a special-purpose processor (including, e.g., general-purpose processors, server processors or processing elements for use in a server-environment, coprocessors such as security coprocessors, high-throughput MIC processors, GPGPU's, accelerators, such as, *e.g.,* graphics accelerators or digital signal processing (DSP) units, cryptographic accelerators, fixed function accelerators, machine learning accelerators, networking accelerators, or computer vision accelerators), field programmable gate arrays, or any other processor or processing device). In one embodiment, controller hub 820 may include an integrated graphics accelerator.

There can be a variety of differences between the physical resources 810, 815 in terms of a spectrum of metrics of merit including architectural, microarchitectural, thermal, power consumption characteristics, and the like.

In one embodiment, the processor 810 executes instructions that control data processing operations of a general type. Embedded within the instructions may be coprocessor instructions. The processor 810 recognizes these coprocessor instructions as being of a type that should be executed by the attached coprocessor 845. Accordingly, the processor 810 issues these coprocessor instructions (or control signals representing coprocessor instructions) on a coprocessor bus or other interconnect, to coprocessor 845. Coprocessor(s) 845 accept and execute the received coprocessor instructions.

Referring now to Figure 9, shown is a block diagram of a first more specific exemplary system 900 in accordance with an embodiment of the present invention. As shown in Figure 9, multiprocessor system 900 is a point-to-point interconnect system, and includes a first processor 970 and a second processor 980 coupled via a point-to-point interconnect 950. Each of processors 970 and 980 may be some version of the processor 700. In one embodiment of the invention, processors 970 and 980 are respectively processors 810 and 815, while coprocessor 938 is coprocessor 845. In another embodiment, processors 970 and 980 are respectively processor 810 coprocessor 845.

Processors 970 and 980 are shown including integrated memory controller (IMC) units 972 and 982, respectively. Processor 970 also includes as part of its bus controller unit's point-to-point (P-P) interfaces 976 and 978; similarly, second processor 980 includes P-P interfaces 986 and 988. Processors 970, 980 may exchange information via a point-to-point (P-P) interface 950 using P-P interface circuits 978, 988. As shown in Figure 9, IMCs 972 and 982 couple the processors to respective memories, namely a memory 932 and a memory 934, which may be portions of main memory locally attached to the respective processors.

Processors 970, 980 may each exchange information with a chipset 990 via individual P-P interfaces 952, 954 using point to point interface circuits 976, 994, 986, 998. Chipset 990 may optionally exchange information with the coprocessor 938 via a high-performance interface 992. In one embodiment, the coprocessor 938 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 990 may be coupled to a first bus 916 via an interface 996. In one embodiment, first bus 916 may be a Peripheral Component Interconnect (PCI) bus, or a bus such as a PCI Express bus or another third generation I/O interconnect bus, although the scope of the present invention is not so limited.

As shown in Figure 9, various I/O devices 914 may be coupled to first bus 916, along with a bus bridge 918 which couples first bus 916 to a second bus 920. In one embodiment, one or more additional processor(s) 915, such as general-purpose processors, server processors or processing elements for use in a server-environment, coprocessors (e.g., security coprocessors) high-throughput MIC processors, GPGPU's, accelerators (such as, e.g., graphics accelerators or digital signal processing (DSP) units, cryptographic accelerators, fixed function accelerators, machine learning accelerators, networking accelerators, or computer vision accelerators), field programmable gate arrays, or any other processor or processing device, are coupled to first bus 916. In one embodiment, second bus 920 may be a low pin count (LPC) bus. Various devices may be coupled to a second bus 920 including, for example, a keyboard and/or mouse 922, communication devices 927 and a storage unit 928 such as a disk drive or other mass storage device which may include instructions/code and data 930, in one embodiment. Further, an audio I/O 924 may be coupled to the second bus 920. Note that other architectures are possible. For example, instead of the point-to-point architecture of Figure 9, a system may implement a multi-drop bus or other such architecture.

Referring now to Figure 10, shown is a block diagram of a second more specific exemplary system 1000 in accordance with an embodiment of the present invention. Like elements in Figures 9 and 10 bear like reference numerals, and certain aspects of Figure 9 have been omitted from Figure 10 in order to avoid obscuring other aspects of Figure 10.

Figure 10 illustrates that the processors 970, 980 may include integrated memory and I/O control logic ("CL") 972 and 982, respectively. Thus, the CL 972, 982 include integrated memory controller units and include I/O control logic. Figure 10 illustrates that not only are the memories 932, 934 coupled to the CL 972, 982, but also that I/O devices 1014 are also coupled to the control logic 972, 982. Legacy I/O devices 1015 are coupled to the chipset 990.

Referring now to Figure 11, shown is a block diagram of a SoC 1100 in accordance with an embodiment of the present invention. Similar elements in Figure 7 bear like reference numerals. Also, dashed lined boxes are optional features on more advanced SoCs. In Figure 11, an interconnect unit(s) 1102 is coupled to: an application processor 1110 which includes a set of one or more cores 702A-N, which include cache units 704A-N, and shared cache unit(s) 706; a system agent unit 710; a bus controller unit(s) 716; an integrated memory controller unit(s) 714; a set or one or more coprocessors 1120 which may include integrated graphics logic, an image processor, an audio processor, and a video processor, general-purpose processors, server processors or processing elements for use in a server-environment, security coprocessors, high-throughput MIC processors, GPGPU's, accelerators (such as, e.g., graphics accelerators or digital signal processing (DSP) units, cryptographic accelerators, fixed function accelerators, machine learning accelerators, networking accelerators, or computer vision accelerators), field programmable gate arrays, or any other processor or processing device; an static random access memory (SRAM) unit 1130; a direct memory access (DMA) unit 1132; and a display unit 1140 for coupling to one or more external displays. In one embodiment, the coprocessor(s) 1120 include a special-purpose processor, such as, for example, a network or communication processor, compression engine, GPGPU, a high-throughput MIC processor, embedded processor, or the like.

### Concluding Remarks

Embodiments of the mechanisms disclosed herein may be implemented in hardware, software, firmware, or a combination of such implementation approaches. Embodiments of the invention may be implemented as computer programs or program code executing on programmable systems comprising at least one processor, including, e.g., general-purpose processors, server processors or processing elements for use in a server-environment, coprocessors (e.g., security coprocessors) high-throughput MIC processors, GPGPU's, accelerators (such as, e.g., graphics accelerators or digital signal processing (DSP) units, cryptographic accelerators, fixed function accelerators, machine learning accelerators, networking accelerators, or computer vision accelerators), field programmable gate arrays, or any other processor or processing device, a storage system (including volatile and non-volatile memory and/or storage elements), at least one input device, and at least one output device.

Program code, such as code 930 illustrated in Figure 9, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

Instructions to be executed by a processor core according to embodiments of the invention may be embodied in a "generic vector friendly instruction format" which is detailed below. In other embodiments, such a format is not utilized and another instruction format is used, however, the description below of the write-mask registers, various data transformations (swizzle, broadcast, etc.), addressing, etc. is generally applicable to the description of the embodiments of the instruction(s) above. Additionally, exemplary systems, architectures, and pipelines are detailed below. Instructions may be executed on such systems, architectures, and pipelines, but are not limited to those detailed.

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

Figure 12 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. Figure 12 shows a program in a high-level language 1202 may be compiled using an x86 compiler 1204 to generate x86 binary code 1206 that may be natively executed by a processor with at least one x86 instruction set core 1216. The processor with at least one x86 instruction set core 1216 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1204 represents a compiler that is operable to generate x86 binary code 1206 (e.g., object code) that can, with or without additional linkage processing, be executed on the processor with at least one x86 instruction set core 1216. Similarly, Figure 12 shows the program in the high level language 1202 may be compiled using an alternative instruction set compiler 1208 to generate alternative instruction set binary code 1210 that may be natively executed by a processor without at least one x86 instruction set core 1214 (e.g., a processor with cores that execute the MIPS instruction set of MIPS Technologies of Sunnyvale, CA and/or that execute the ARM instruction set of ARM Holdings of Sunnyvale, CA). The instruction converter 1212 is used to convert the x86 binary code 1206 into code that may be natively executed by the processor without an x86 instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have an x86 instruction set processor or core to execute the x86 binary code 1206.

Operations in flow diagrams may have been described with reference to exemplary embodiments of other figures. However, it should be understood that the operations of the flow diagrams may be performed by embodiments of the invention other than those discussed with reference to other figures, and the embodiments of the invention discussed with reference to other figures may perform operations different than those discussed with reference to flow diagrams. Furthermore, while the flow diagrams in the figures show a particular order of operations performed by certain embodiments of the invention, it should be understood that such order is exemplary (e.g., alternative embodiments may perform the operations in a different order, combine certain operations, overlap certain operations, etc.).

One or more parts of embodiments of the invention may be implemented using different combinations of software, firmware, and/or hardware. Embodiments may be implemented using an electronic device that stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) may include hardware and software, such as a set of one or more processors coupled to one or more machine-readable storage media to store code for execution on the set of processors and/or to store data. For instance, an electronic device may include non-volatile memory containing the code since the non-volatile memory may persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) to establish network connections (to transmit and/or receive code and/or data using propagating signals) with other electronic devices.

While the invention has been described in terms of several embodiments, those skilled in the art will recognize that the invention is not limited to the embodiments described, can be practiced with modification and alteration within the spirit and scope of the appended claims. The description is thus to be regarded as illustrative instead of limiting.

## Claims

1. A processor comprising:
safe logic to determine whether a load is safe;
data forwarding hardware to, in response to a determination that the load is safe, forward data requested by the load and, in response to a determination that the load is unsafe, block forwarding of the data; and
data fetching hardware to fetch the data requested by the load, regardless of the determination that the load is safe.

2. The processor of claim 1, wherein the data forwarding hardware includes a load queue.

3. The processor of claim 1, wherein the data fetching hardware includes a miss queue.

4. The processor of claim 1, wherein the safe logic is to determine whether the load is safe based on information from a reservation station or an out-of-order execution cluster.

5. The processor of claim 1, further comprising a translation lookaside buffer to store an address translation, the address translation to be performed in response to the load, regardless of the determination that the load is safe.

6. The processor of claim 1, wherein the safe logic is to determine that the load is safe when it is no longer speculative.

7. The processor of claim 1, wherein the load is to be performed in response to a load instruction and the safe logic is to determine that the load is safe when the load instruction is ready to be retired.

8. The processor of claim 1, wherein the data is to be forwarded to one or more dependent instructions.

9. The processor of claim 1, wherein the load is to be squashed in response to a determination that speculative execution of the load is on a wrong path.

10. The processor of claim 1, wherein the load is to be executed in response to a branch prediction and the safe logic is to determine that the load is safe when a condition to the branch prediction is satisfied.

11. A method comprising:
determining whether a load is safe;
in response to determining that the load is unsafe, blocking forwarding of data requested by the load;
in response to determining that the load is safe, forwarding the data; and
regardless of a determination that the load is unsafe, fetching the data requested by the load.

12. The method of claim 11, further comprising, regardless of the determination that the load is unsafe, performing an address translation and storing the result in a translation lookaside buffer.

13. The method of claim 11, wherein the load is on a speculative execution path., further comprising:
determining that the speculative execution path is wrong; and
in response to determining that the speculative execution path is wrong, squashing the load.

14. A system comprising:
a system memory; and
a processor including:
safe logic to determine whether a load is safe;
data forwarding hardware to, in response to a determination that the load is safe, forward data requested by the load; and
data fetching hardware to fetch the data requested by the load, regardless of the determination that the load is safe, wherein the data is to be fetched from the system memory.

15. The system of claim 14, wherein the data forwarding hardware is also, in response to a determination that the load is unsafe, to block forwarding of the data.
